# EUROPÄISCHE PATENTSCHRIFT

(11) **EP 2 795 249 B1**
(45) Veröffentlichungstag und Bekanntmachung des Hinweises auf die Patenterteilung: **25.09.2019**
(21) Anmeldenummer: 12795407.1
(22) Anmeldetag: 28.11.2012
(51) Int. Cl.: G01B 11/27

(54) **VORRICHTUNG ZUM ERMITTELN DER LAGE VON MECHANISCHEN ELEMENTEN**
DEVICE FOR DETECTING THE POSITION OF MECHANICAL ELEMENTS
DISPOSITIF DE DÉTERMINATION DE LA POSITION D'ÉLÉMENTS MÉCANIQUES

(30) Priorität: 30.11.2011 DE 102011119732
(43) Veröffentlichungstag der Anmeldung: 29.10.2014
(73) Patentinhaber: Prüftechnik Dieter Busch GmbH, 85737 Ismaning (DE)
(72) Erfinder: LYSEN, Heinrich, 85748 Garching (DE)
(86) Internationale Anmeldenummer: PCT/EP2012/073828
(87) Internationale Veröffentlichungsnummer: WO 2013/079525

(56) Entgegenhaltungen:
- WO-A1-2010/042039
- DE-A1- 10 143 812
- US-A1- 2011 113 888

## Beschreibung

Die Erfindung betrifft eine Vorrichtung zum Ermitteln der Lage eines ersten und eines zweiten mechanischen Elements zueinander, mit einer ersten Messeinheit zum Ansetzen an das erste mechanische Element und einer zweiten Messeinheit zum Ansetzen an das zweite mechanische Element sowie einer Auswerteeinheit.

Einer solche Vorrichtung kann beispielsweise zum Ermitteln der Ausrichtung von zwei Wellen zueinander ausgebildet sein.

Typischerweise weist bei solchen Ausrichtmessvorrichtungen mindestens einer der beiden Messeinheiten eine Lichtquelle zum Erzeugen eines Lichtstrahls auf, dessen Auftreffpunkt auf einem oder mehreren Detektoren an der anderen Messeinheit oder auf einem Detektor an der mit der Lichtquelle versehenen Messeinheit ermittelt wird, wobei im letzteren Fall die andere Messeinheit den Lichtstrahl zurückreflektiert. Typischerweise wird zum Ermitteln der Ausrichtung der Wellen zudeinander die Lage des Auftreffpunkts des Lichtstrals in mehreren Rotationswinkel-Positionen ermittelt, wozu die Messeinheiten entlang der Umfangsfläche verschoben werden oder die Wellen mit den Messeinheiten gedreht werden.

In der DE 33 20 163 A1 und der DE 39 11 307 A1 sind Wellenausrichtungs-Messvorrichtungen beschrieben, bei welchen die erste Messeinheit einen Lichtstrahl aussendet, der von einem Spiegelprisma der zweiten Messeinheit auf einen optischen Detektor der ersten Messeinheit zurückreflektiert wird.

In der DE 33 35 336 A1 ist eine Wellenausrichtungs-Messvorrichtung beschrieben, bei welcher sowohl die erste als auch die zweite Messeinheit jeweils einen Lichtstrahl aussenden und einen optischen Detektor aufweisen, wobei der Lichtstrahl jeweils auf den Detektor der anderen Messeinheit gerichtet wird.

Aus der DE 38 14 466 A1 ist eine Wellenausrichtungs-Messvorrichtung bekannt, bei welcher die erste Messeinheit einen Lichtstrahl aussendet, der auf zwei in axialer Richtung hintereinander angeordnete optische Detektoren der zweiten Messeinheit fällt.

Aus der WO 03/067187 A1 ist eine Wellenausrichtungs-Messvorrichtung bekannt, bei welcher die erste Messeinheit einen fächerförmigen Strahl aussendet, der auf zwei in axialer Richtung hintereinander angeordnete optische Detektoren der zweiten Messeinheit fällt.

Aus der WO 00/28275 A1 ist eine Wellenausrichtungs-Messvorrichtung bekannt, bei welcher zwei Messeinheiten an jeweils eine Stirnseite der beiden Wellen angebracht werden, wobei die erste Messeinheit einen fächerförmigen Lichtstrahl aussendet, der drei in einer Ebene der zweiten Messvorrichtung angeordnete Markierungsstifte seitlich trifft.

In der EP 0 962 746 A2 ist eine Wellenausrichtungs-Messvorrichtung beschrieben, bei welcher die erste Einheit eine Quelle für einen Lichtstrahl in einer ersten Farbe, einen Strahlteiler sowie einen farbempfindlichen CCD-Detektor und die zweite Einheit eine Quelle für einen Lichtstrahl in einer zweiten Farbe sowie einen Farbteiler (farbselektiver Strahlteiler) aufweist, der für die erste Farbe reflektierend und für die zweite Farbe transmittierend ist, wobei die Lichtquelle der zweiten Einheit von der ersten Einheit aus gesehen hinter dem Farbteiler angeordnet ist und die Lichtquelle der ersten Einheit von der zweiten Einheit aus gesehen hinter dem Strahlteiler angeordnet ist. Der von der ersten Einheit ausgesendete Lichtstrahl durchdringt zunächst den Strahlteiler der ersten Einheit und wird dann an dem Farbteiler der zweiten Einheit reflektiert, wobei dieser reflektierte Strahl wiederum an den Strahlteiler der ersten Einheit reflektiert wird, um auf den Detektor zu gelangen. Der Lichtstrahl aus der zweiten Einheit durchdringt zunächst den Farbteiler der zweiten Einheit und wird von dem Strahlteile der ersten Einheit auf den Detektor reflektiert.

Als gemeinsames Merkmal der bisher gewürdigten Wellenausrichtungs-Messvorrichtungen ist festzustellen, dass jeweils der Auftreffpunkt eines Lichtstrahls auf einer Detektorfläche ermittelt und ausgewertet wird.

Aus der DE 40 41 723 A1 ist eine Vorrichtung zur Bestimmung der Position eines Messpunkts relativ zu einem Bezugspunkt zur Steuerung oder Kontrolle des Vortriebs einer Bohrung bekannt, welche mehrere Messstationen aufweist, die in der Bohrung bzw. am Bohrkopf angeordnet sind und jeweils eine Kamera mit einer Markierung aufweisen, wobei jede Kamera die Markierung der benachbarten Kamera bzw. Messstation aufnimmt.

Aus der WO 2010/042039 A1 ist eine Wellenausrichtungsmessvorrichtung bekannt, bei welcher jede der beiden Messeinheiten mit einer in einem Gehäuse angeordneten Kamera versehen ist, wobei die der anderen Einheit zugewandte Gehäuseseite mit einem optischen Muster versehen ist, welches von der gegenüberliegende Kamera aufgenommen wird. Die mit dem Muster versehene Gehäuseseite ist dabei jeweils mit einer Öffnung versehen, durch welche das gegenüberliegende Muster abgebildet wird. Bei einer alternativen Ausführung ist eine der beiden Einheiten nur mit einer Kamera, nicht aber mit einem Muster versehen, während die andere Einheit keine Kamera aufweist, jedoch mit einem dreidimensionalen Muster versehen ist.

Ferner kann eine Vorrichtung der eingangs genannten Art statt zum Wellenausrichten für die Ermittlung der Geradheit bzw. Ebenheit eines Objekts, z.B. einer Schiene oder einer Bodenfläche verwendet werden. Gemäß einer weiteren Alternative kann eine Vorrichtung der eingangs genannten Art zur Vermessung der Lage von Körpern bezüglich einer Referenzachse verwendet werden, z.B. zur Vermessung von zylindrischen Hohlkörpern bezüglich einer zentralen Symmetrie-Achse, wie sie beispielsweise in der EP 0 543 971 B1 beschrieben ist.

DE 101 43 812 A1 zeigt die Ausrichtung zweier Achsen mit einem Strahlteiler und einer Kamera. Die Ausrichtung wird durchgeführt, indem ein optisches Muster zwischen den beiden Achsen reflektiert und von der Kamera abgebildet wird.

Es ist Aufgabe der vorliegenden Erfindung, eine Vorrichtung zum Ermitteln der Lage von zwei mechanischen Elementen zueinander zu schaffen, bei welcher keine Erzeugung eines kollimierten Lichtstrahls erforderlich ist und die relativ einfach ausgebildet ist. Es ist auch Aufgabe der Erfindung, für ein entsprechendes Verfahren zum Ermitteln der Lage von zwei mechanischen Elementenzueinander zu schaffen.

Diese Aufgabe wird erfindungsgemäß gelöst durch eine Vorrichtung gemäß Anspruch 1 sowie ein Verfahren gemäß Anspruch 15.

Die erfindungsgemäße Lösung ist vorteilhaft, dass dadurch, das jede der beiden Messeinheiten mit einem optischen Muster versehen ist und ein Strahlteiler in einer Weise vorgesehen ist, welche die Abbildung einer Überlagerung der beiden optischen Muster auf dem Detektor der Kamera ermöglicht, keine Erzeugung eines kollimierten Lichtstrahls ferner auch nur eine einzelne Kamera als Detektor erforderlich ist, so dass die zweite Messeinheit weder mit einem Detektor noch mit einer Lichtquelle ausgestattet werden muss.

Vorzugsweise weist das erste optische Muster eine erste Farbe und das zweite optische Muster eine zweite Farbe auf, die von der ersten Farbe verschieden ist, wobei der Strahlteiler als vorzugsweise Farbteiler ausgebildet ist, der für die erste Farbe stärker reflektierend für als für die zweite Farbe und für die zweite Farbe stärker transmittierend als für die erste Farbe ist.

Die Trennung der beiden Muster auf dem Detektor kann beispielsweise durch eine farbempfindliche Ausgestaltung des Detektors, durch eine zeitlich versetzte Beleuchtung der beiden Muster, beispielsweise mittels Blitzlampen, oder durch Erkennen der jeweiligen Mustergeometrie erfolgen.

Vorzugsweise ist die Vorrichtung zum Ermitteln der Ausrichtung von Wellen zueinander ausgebildet, wobei die erste Messeinheit zum Ansetzen an eine Umfangsfläche der ersten Welle und die zweite Messeinheit zum Ansetzen an eine Umfangsfläche der zweiten Welle ausgebildet ist. Die Vorrichtung kann alternativ jedoch auch zum Ermitteln der Geradheit des Körpers ausgebildet sein, wobei es sich bei dem ersten und zweiten mechanischen Element dann um Teile eines gemeinsamen Körpers handelt. Gemäß einer weiteren Alternative kann die Vorrichtung zum Ermitteln der Lage eines Körpers bezüglich einer Referenzachse ausgebildet sein; z.B. zur Ermittlung der Lage der Krümmungsmittelachse eines kreizylindrischen Hohlkörpers bezüglich einer durch die Mittelachse eines anderen Körpers vorgegeben Referenzachse (solche Vermessungen sind beispielsweise bei der Montage von Turbinen erforderlich).

Weitere bevorzugte Ausgestaltungen der Erfindung sind in den abhängigen Ansprüchen angegeben.

Im Folgenden wird die Erfindung anhand der beigefügten Zeichnungen beispielhaft näher erläutert. Dabei zeigen:
- Fig. 1: eine schematische seitliche Ansicht eines ersten Beispiels einer erfindungsgemäßen Vorrichtung;
- Fig. 2: eine Ansicht wie Fig. 1, wobei ein abgewandeltes Beispiel dargestellt ist;
- Fig. 3: eine Ansicht wie Fig. 1, wobei ein anderes abgewandeltes Beispiel dargestellt ist;
- Fig. 4: eine Ansicht wie Fig. 1, wobei ein weiteres abgewandeltes Beispiel dargestellt ist; und
- Fig. 5: eine Ansicht wie Fig. 2, wobei jedoch eine Anwendung der Messeinheiten von Fig. 2 für eine Geradheitsmessung statt für eine Wellenausrichtung gezeigt ist.

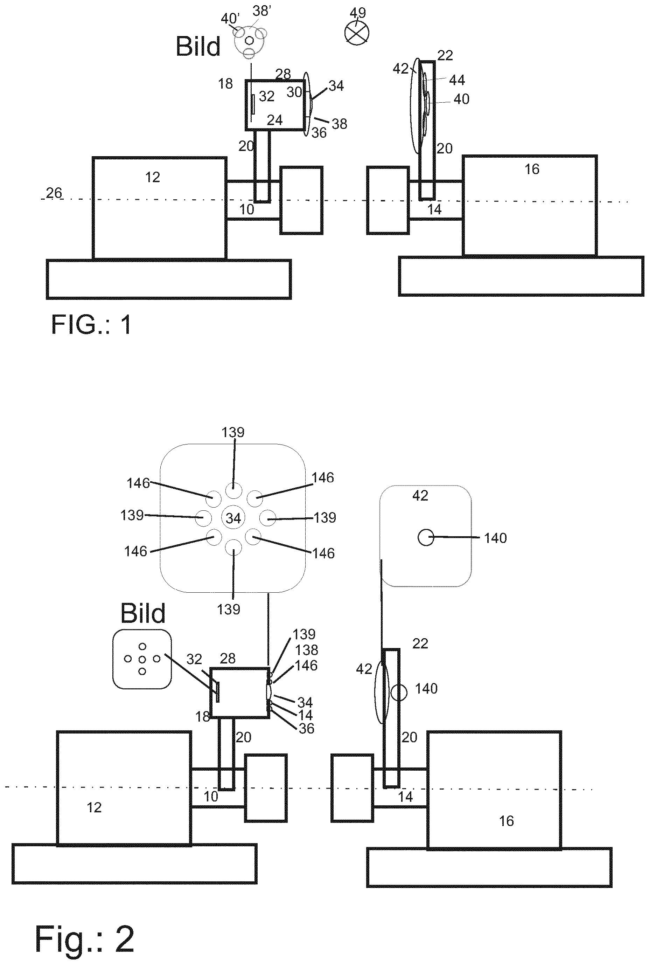

In Fig. 1 ist ein erstes Beispiel einer erfindungsgemäßen Vorrichtung zur Ermittlung der Ausrichtung einer ersten Welle 10 einer Maschine 12 und einer zweiten Welle 14 einer Maschine 16 zueinander gezeigt. Die Vorrichtung umfasst eine erste Messeinheit 18, die ein Element 20 zum Ansetzen an eine Umfangsfläche der ersten Welle 10 aufweist, sowie eine zweite Messeinheit 22, die ein Element 20 zum Ansetzen an eine Umfangsfläche der zweiten Welle 14 aufweist. Ferner umfasst die Vorrichtung eine Auswerteeinheit 24, die im Beispiel von Fig. 1 als Teil der ersten Messeinheit 18 dargestellt ist, jedoch auch als Teil eines externen Geräts implementiert sein könnte. Die beiden Wellen 10 und 14 sind möglichst fluchtend hintereinander bezüglich einer Referenz-Achse 26 angeordnet, wobei die Vorrichtung mit den beiden Messeinheiten 18, 22 dazu dient, einen eventuellen Winkelversatz und/oder Parallelversatz bezüglich der Referenz-Achse 26 bzw. relativ zueinander zu bestimmen. Die Vorrichtung umfasst typischerweise auch Mittel zum Anzeigen des Ergnisses bzgl. Winkelversatz bzw. Parallelversatz (in den Figuren nicht dargestellt).

Im gezeigten Beispiel weist die erste Messeinheit 18 ein Gehäuse 28, welches von dem Ansetzelement 20 abgestützt wird, sowie eine Kamera 30 auf, die als wesentliche Komponenten einen optischen Detektor 32 und eine Abbildungsoptik 34 umfasst. Der Detektor 32 ist dabei im Inneren des Gehäuses 28 und die Abbildungsoptik 34 in einer Öffnung an einer Stirnfläche 36 des Gehäuses 28 ausgebildet, welche der zweiten Messeinheit 22 zugewandt ist, wenn die beiden Messeinheiten 18 und 22 an die jeweilige Welle 10 bzw. 14 angesetzt sind. Diese Stirnfläche 36 ist ferner mit einem ersten optischen Muster 38 mit einer ersten Farbe versehen, welches vorzugsweise die Öffnung für die Abbildungsoptik 34 umgibt. Das erste optische Muster 38 kann beispielsweise von einer monochromen Kreisfläche gebildet werden, in deren Zentrum die Öffnung die Abbildungsoptik 34 angeordnet ist.

Die zweite Messeinheit weist ein zweites optisches Muster 40 mit einer zweiten Farbe sowie einen Strahlteiler 42 auf, der vorzugsweise als Farbteiler ausgebildet und dabei für die erste Farbe reflektierend und für die zweite Farbe transmittierend ist, wobei das zweite optische Muster 40 von der ersten Messeinheit 18 aus gesehen hinter dem Strahlteiler 42 angeordnet ist, wenn die beiden Messeinheiten 18, 22 an die jeweilige Welle 10 bzw. 14 angesetzt sind.

Das zweite optische Muster kann beispielsweise von einer Mehrzahl von monochromen Kreisflächen gebildet werden, die um ein Zentrum herum angeordnet sind (solche Kreisflächen sind im Beispiel von Fig. 1 mit 44 bezeichnet).

Da der Strahlteiler 42 für die erste Farbe und damit für das erste Muster 38 reflektierend ist, wird das erste Muster 38 an dem Strahlteiler 42 gespiegelt und kann auf diese Weise mittels der Abbildung und die 34 der Kamera 30 auf den Detektor 32 abgebildet werden. Da der Farbteiler für die zweite Farbe und damit für das zweite Muster 40 transmittierend ist, kann auf diese Weise das zweite Muster 40 mittels der Abbildungsoptik 34 der Kamera 30 gleichfalls auf den Detektor 32 abgebildet werden, so dass insgesamt eine Überlagerung des ersten Musters 38 der ersten Messeinheit 18 und des zweiten Musters 40 der zweiten Messeinheit 22 auf dem Detektor 32 abgebildet wird. In Fig. 1 ist oberhalb des Detektors 32 ein solches überlagertes Abbild bestehend aus einer Abbildung 38' des ersten Musters 38 und einer Abbildung 40' des zweiten Musters 40 angedeutet. Im Beispiel von Fig. 2 handelt es sich bei dem Detektor 32 um einen Flächendetektor, d.h. einen zweiachsigen Detektor, beispielsweise einen CCD-Chip.

Im Beispiel von Fig. 1 ist der Detektor vorzugsweise farbempfindlich ausgebildet, so dass mittels der Farbempfindlichkeit die Position des Abbilds 38' des ersten Musters 38 von der Position des Abbilds 40' des zweiten Musters 40 getrennt werden kann.

Die Auswerteeinheit 24 ist ausgebildet, um aus den relativen Positionen der Abbildung 38' des ersten optischen Musters 38 und der Abbildung 40' des zweiten optischen Musters 40 auf dem Detektor 32 die relative Ausrichtung der Welle 10, 14 zueinander, d.h. den Winkelversatz und den Parallelversatz zueinander zu ermitteln. Die Auswerteeinheit 24 wertet dazu die vom Detektor 32 gelieferte Bildinformation aus.

Die relativen Positionen der Abbildungen 38', 40' des ersten Musters 38 bzw. des zweiten Musters 40 auf dem Detektor 32 hängen dabei auf dem Fachmann bekannte Weise von dem Abstand der beiden Messeinheiten 18, 22 in axialer Richtung und die Winkel- bzw. Parallelversatz der beiden Wellen 10, 14 ab.

Typischerweise werden die relativen Positionen auf dem Detektor 32 in mehreren Rotations-Winkelpositionen der Messeinheiten 18, 22 bzgl. der Referenz-Achse 26 ermittelt, wozu die Messeinheiten 18, 22 in Umfangsrichtung entlang der Umfangsfläche der Welle 10, 14 verschoben werden (alternativ könnten auch die Wellen 10, 14 mit den darauf befindlichen Messeinheiten 18, 22 entsprechend gedreht werden). Eine Messung in mehreren Rotations-Winkel-Positionen ist insbesondere erforderlich, wenn sowohl der Parallelversatz als auch der Winkelversatz der beiden Wellen 10, 14 ermittelt werden soll. Ein Beispiel für die Auwertung von Messungen mehreren Rotations-Winkel-Positionen ist in DE 39 11 307 A1 zu finden.

In bestimmten Fällen kann es jedoch auch ausreichend sein, nur in einzigen Winkelposition zu messen, insbesondere wenn eine absolute Kalibrierung der beiden Messeinheiten 18, 22 zueinander vorliegt.

Die Beleuchtung der beiden Muster 38, 40 kann grundsätzlich mit Tageslicht oder Raumlicht in der Maschinenhalle, in welcher die Maschinen 12, 16 aufgestellt sind, erfolgen. Falls sich die Ansetzstellen für die Messeinheiten 18, 22 jedoch in einem abgedeckten Bereich der Maschinen 12, 16 befinden, ist es vorteilhaft, sollte Vorrichtung eine Beleuchtungseinrichtung 49 zum Beleuchten der Muster 38, 40 aufweist.

Die Muster 38, 40 können beispielsweise als eingefärbte Gehäuseflächen, d.h. als farbige Flächen ausgebildet sein. Eine andere Möglichkeit besteht darin, die Muster 38, 40 mittels farbiger Klarsichtfolie zu realisieren. Alternativ könnte beispielsweise auch sogenanntes elektronisches Papier ("organische Elektronik") verwendet werden.

Der Strahlteiler 42 kann grundsätzlich planar ausgebildet sein. Er kann jedoch auch gekrümmt ausgebildet sein, wobei dann die Krümmung in Abhängigkeit von dem Abstand zwischen der ersten Messeinheit 18 und der zweiten Messeinheit 22 gewählt werden kann, um die Entfernungsabhängigkeit der Winkelempfindlichkeit der Messanordnung zu kompensieren (mit zunehmendem Abstand zwischen den beiden Messeinheiten 18, 22 führt beispielsweise der gleiche Winkelversatz der Wellen 10, 14 zu einer zunehmenden relativen Differenz in der Position des Abbilds der Muster 38, 40 auf dem Detektor 32). Zu diesem Zweck kann die zweite Messeinheit 22 so gestaltet sein, dass der Strahlteiler 42 leicht austauschbar ist.

Ein Vorteil in der Ausführungsform gemäß Fig. 1 besteht darin, dass die Messeinheiten 18, 22 grundsätzlich keine Lichtquelle aufzuweisen brauchen, um die beiden Muster 38, 40 zu erzeugen.

Eine alternative Ausführungsform ist in Fig. 2 gezeigt, wobei das erste optische Muster nicht durch farbige Flächen, sondern durch eine Lampenanordnung 138 gebildet wird, die an der Stirnfläche 36 der ersten Messeinheit 18 angeordnet ist und beispielsweise eine Mehrzahl von einzelnen Lampen 139 umfassen kann, die in einem bestimmten geometrischen Muster, z.B. in einem Quadrat, um die Öffnung für die Abbildungsoptik 34 herum angeordnet sein können.

Ferner wird bei der Ausführungsform gemäß Fig. 2 das zweite optische Muster durch das Zusammenspiel einer zweiten Lampenanordnung 141, die gleichfalls auf der Stirnfläche 36 der ersten Messeinheit 18 angeordnet ist, und einer von der zweiten Lampenanordnung 141 zu beleuchtenden Reflektoranordnung 140 erzeugt, die an der zweiten Messeinheit 22 so angeordnet ist, dass sie von der ersten Messeinheit 18 aus gesehen hinter dem Strahlteiler 42 liegt. Vorzugsweise handelt es sich bei der Reflektoranordnung 140 um einen Retroreflektor. Dieser kann beispielsweise auch aus Reflektorfolie bestehen; dabei können die reflektierenden Partikel (typischerweise Glaskügelchen) auch unter einer Farbfolie angeordnet sein. Die zweite Lampenanordnung 141 wird vorzugsweise von einer Mehrzahl von in einem Muster, beispielsweise einem Quadrat um die Öffnung für die Abbildungsoptik 34 herum, angeordneten Lampen 146 gebildet. Die Lampenanordnung 141 dient dazu, die Reflektoranordnung 140 zu beleuchten, so dass diese auf den Detektor 32 abgebildet wird (das Licht der Lampenanordnung 141 wird von dem Strahlteiler 42 transmittiert). Dagegen wird das von der ersten Lampenanordnung 138 ausgesendete Licht von dem Strahlteiler 42 auf die Abbildungsoptik 34 reflektiert, so dass die erste Lampenanordnung 138 in Überlagerung mit dem Abbild der Reflektoranordnung 140 zusammen auf dem Detektor 32 abgebildet wird. Sofern die beiden Lampenanordnungen 138, 141 stationär betrieben werden, sollte der Detektor 32 farbempfindlich ausgebildet sein, um die Abbilder der beiden optischen Muster, d.h. der ersten Lampenanordnung 138 und der Reflektoranordnung 140, zu trennen. Alternativ können die beiden Lampenanordnungen 138, 141 jedoch nicht stationär betrieben werden, z.B. indem die beiden Lampenanordnungen 138, 141 als Blitzlampen ausgebildet sind. In diesem Fall muss der Detektor 32 nicht farbempfindlich sein, da dann die Abbilder der beiden durch die beiden Lampenanordnungen 138, 141 erzeugten Mustern durch unterschiedliche Beleuchtungszeitpunkte getrennt werden können, d.h. es werden für die Detektion bestimmte Zeitfenster gesetzt, um die beiden Muster zu unterscheiden.

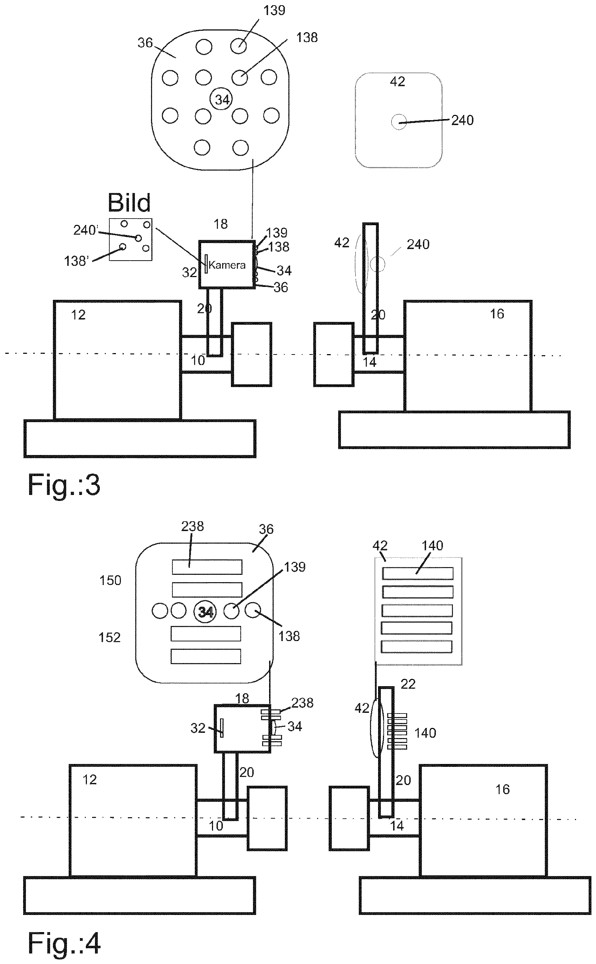

In Fig. 3 ist eine weitere abgewandelte Ausführungsform gezeigt, wobei das erste optische Muster in ähnlicher Weise wie bei der Ausführungsform von Fig. 2 mit einer ersten Lampenanordnung 138 erzeugt wird. Dabei ist die erste Lampenanordnung 138 so ausgebildet, dass sie ein in Abhängigkeit von der jeweiligen Messsituation räumlich variables Muster erzeugen kann. Wie bereits erwähnt wurde, hängt die Position der Abbildung der optischen Muster 38, 40 von der Messsituation ab, insbesondere vom axialen Abstand zwischen den beiden Messeinheiten 18, 22 und dem jeweils vorliegenden Parallelversatz bzw. Winkelversatz der beiden Wellen 10, 14. Wenn beispielsweise das Abbild des ersten Musters 38 im wesentlichen mittig auf dem Detektor 32 liegt, kann eine größere Musterfläche auf die Detektorfläche abgebildet werden, als wenn die Abbildung des ersten optischen Musters 38 recht weit von der Mitte der Fläche des Detektors 32 entfernt liegt (im letzteren Fall wird dann zumindest ein Randbereich des Musters nicht mehr auf die empfindliche Detektorfläche abgebildet). In solchen Fällen kann es sinnvoll sein, die ohnehin nicht mehr abgebildeten Bereiche der Lampenanordnung 138 auszuschalten, indem die betroffenen Lampen 139 abgeschaltet werden. Eine solche Variabilität der Lampenanordnung kann beispielsweise dadurch erzeugt werden, dass die Lampen 139 einzeln ansteuerbar sind.

Ferner wird bei der Ausführungsform gemäß Fig. 3 das zweite optische Muster 40 nicht mittels Beleuchtung eines Reflektors sondern durch eine zweite Lampenanordnung 240 erzeugt, welche als Teil der zweiten Messeinrichtung 22 von der ersten Messeinheit 18 aus gesehen hinter dem Strahlteiler 42 angeordnet ist. Das von der Lampenanordnung 240 gebildete Muster wird durch den Strahlteiler 42 transmittiert und mittels der Abbildungsoptik 34 als Abbild 240' auf dem Detektor 32 abgebildet, zusammen mit dem Abbild 138' der ersten Lampenanordnung 138, die an dem Farbteiler 42 auf die Abbildungsoptik 34 reflektiert wird. In Fig. 3 ist dabei eine Situation angedeutet, bei welcher lediglich die vier am nächsten bei der Abbildungsoptik 34 befindlichen Lampen 139 der ersten Lampenanordnung 138 auf die Detektorfläche 32 abgebildet werden, wobei die übrigen Lampen 139 abgeschaltet werden können.

In Fig. 4 ist eine weitere abgewandelte Ausführungsform gezeigt, wobei der Detektor 32 hier als Zeilendetektor, d.h. als einachsiger Detektor, und nicht als flächiger zweiachsiger Detektor ausgebildet ist. Hier wird die Position des Abbilds des jeweiligen optischen Musters auf den Detektor also nur in einer Richtung erfasst. Entsprechend sind die optischen Muster 38, 40 in diesem Fall vorzugsweise streifenartig bzw. balkenartig ausgebildet, wobei die Streifen so angeordnet sind, dass sie bei der Abbildung auf den Detektor 32 im wesentlichen senkrecht zu der Richtung des Zeilendetektors stehen.

Eine solche streifenartige Ausbildung des ersten Musters 38 und des zweiten Musters 40 kann beispielsweise dadurch erzielt werden, dass an der Stirnfläche 36 der ersten Messeinheit eine erste Lampenanordnung 138 und eine zweite Lampenanordnung 150 vorgesehen ist. Die erste Lampenanordnung 138 kann von einzelnen Lampen 139 gebildet werden, und die zweite Lampenanordnung 150 kann von einzelnen Lampen 152 gebildet werden, die jeweils um die Öffnung für die Abbildungsoptik 34 herum angeordnet sein können.

An der zweiten Einheit 22 ist ähnlich wie im Fall der Ausführungsform von Fig. 2 eine Reflektoranordnung 140 vorgesehen, die von der ersten Messeinheit 18 aus gesehen hinter dem Strahlteiler 42 angeordnet ist. Im Gegensatz zu der Ausführungsform von Fig. 2 wird jedoch die erste Lampenanordnung 138 nicht direkt auf den Detektor 32 abgebildet, sondern dient lediglich dazu, über Reflektion an dem Strahlteiler 42 eine Reflektoranordnung 238 zu beleuchten, die an der Stirnfläche 36 der ersten Messeinheit 18 als streifenförmige Anordnung ausgebildet ist.

Die Reflektoranordnung 238 bildet dabei eine erste Reflektoranordnung, während die Reflektoranordnung 140 eine zweite Reflektoranordnung bildet. Beide Reflektoranordnungen sind streifenförmig ausgebildet. Die erste Reflektoranordnung 238 wird nun mittels der Abbildungsoptik 34 auf den Detektor 32 abgebildet, indem das von der Reflektoranordnung 238 ausgehende Licht an dem Farbteiler 42 in die Abbildungsoptik 34 reflektiert wird. Im vorliegenden Fall werden das erste Muster 38 und das zweite Muster 40 vorzugsweise deshalb mittels streifenförmiger Reflektoranordnungen realisiert, da es schwierig ist, eine streifenförmige Lampenanordnung zu realisieren, die auf der ganzen Länge des Streifens eine gleichmäßige Lichtintensität abstrahlt. Auf dem Zeilendetektor 32 findet sich also eine Überlagerung der Abbildung der ersten Reflektoranordnung 238 und der Abbildung der zweiten Reflektoranordnung 140, wobei sich der Ausrichtungsfehler aus der relativen Verlagerung der beiden abgebildeten Streifenmuster auf dem Detektor 32 ergibt.

Zwar könnte eine solche Anordnung grundsätzlich auch jeweils mittels eines einzelnen Streifens realisiert werden, jedoch ist die Auswertungsgenauigkeit bei Verwendung eines Streifenmusters mit einer Mehrzahl von Streifen höher. Die beiden Reflektoranordnungen 238 und 144 sind vorzugsweise als Retroreflektoranordnungen ausgebildet, die beispielsweise auch aus (gfs. auch farbiger) Reflektorfolie bestehen können. Die Streifen sind vorzugsweise alle parallel zueinander.

Die beiden Lampenanordnungen 138 und 150 werden vorzugsweise als Blitzlichtlampen realisiert. In diesem Fall braucht der Zeilendetektor 32 nicht farbempfindlich zu sein.

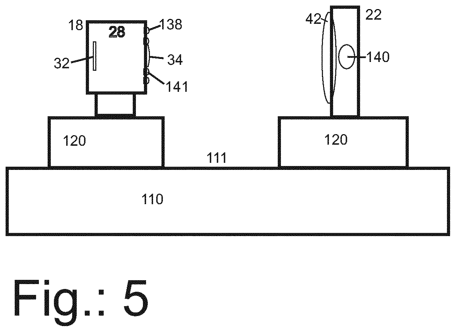

Eine Abwandlung der Vorrichtung von Fig. 2 ist in Fig. 5 gezeigt. Während die Vorrichtung in Fig. 2 zur Ermittlung der Ausrichtung der Wellen 10, 14 ausgebildet ist, ist die Vorrichtung von Fiog. 5 für die Ermittlung der Geradheit eines Körpers 110 ausgebildet. Dabei weisen die Messeinheiten 18, 22 statt der Elemente 20 zum Ansetzen die jeweilige Umfangsfläche der Wellen 10, 14 Elemente 120 zum flächigen fomrschlüssigen Ansetzen an eine zu vermessende Fläche 111 des Körpers 110 auf. Geradheitsabweichungen der Fläche 111 führen dabei zu Verkippung bzw. Verdrehung der Messeinheiten 18, 22 relativ zueinander, was zu einer entsprechenden Verschiebung der Abbildungen der optischen Muster auf dem Detektor 32 führt, woraus die entsprechenden Geradheitsabweichungen der Fläche 111 ermittelt werden können. Die Messeinheiten können über die Fläche 111 verschoben werden, um die ganze Fläche auszumessen.

Obschon in allen bisher beschriebenen Ausführungsformen die beiden optischen Muster in unterschiedlichen Farben (z.B. grün/rot order blau/rot) ausgebildet sind und der Strahlteiler der zweiten Messeinheit 22 als Farbteiler ausgebildet ist, ist eine solche Farbcodierung der beiden Muster nicht zwingend erforderlich, sofern sie sich geometrisch hinreichend gut unterscheiden. In diesem Fall könnten die beiden optischen Muster gleichfarbig oder als Schwarzweißmuster bzw. Muster in Grautönen ausgebildet sein. Jedoch müssen sich die beiden Muster geometrisch so deutlich unterscheiden, dass eine Trennung des Abbilds der beiden Muster auf dem Detektor möglich ist, um die jeweilige Position des Musters auf dem Detektor separat vom anderen Muster zu bestimmen.

Obschon es grundsätzlich ausreichend ist, wenn der Strahlteiler als teildurchlässiger Reflektor ohne Farbselektivität ausgebildet ist, ist der Strahlteiler wie beschrieben vorzugsweise jedoch als Farbteiler ausgebildet, d.h. er ist für die erste Farbe stärker reflektierend als für die zweite Farbe und für die zweite Farbe stärker transmittierend als für die erste Farbe. Eine solche Farbselektivität ist jedoch nur sinnvoll, wenn die beiden Muster in unterschiedlichen Farben ausgebildet sind.

## Patentansprüche

1. Vorrichtung zum Ermitteln der Lage eines ersten mechanischen Elements (10, 110) und eines zweiten mechanischen Elements (14, 110) zueinander, mit einer ersten Messeinheit (18) zum Ansetzen an das erste mechanische Element, einer zweiten Messeinheit (22) zum Ansetzen an das zweite mechanische Element, sowie einer Auswerteeinheit (24), wobei die Vorrichtung Mittel (49; 138; 42, 238) zum Erzeugen eines ersten optischen Musters (38) an der ersten Messeinheit sowie Mittel (49; 140, 141; 240) zum Erzeugen eines zweiten optischen Musters (40) an der zweiten Messeinheit aufweist,
wobei die zweite Messeinheit einen Strahlteiler (42) aufweist, welcher der ersten Messeinheit zugewandt ist, wenn die Messeinheiten an das jeweilige mechanische Element angesetzt sind, wobei das zweite optische Muster von der ersten Messeinheit gesehen hinter dem Strahlteiler angeordnet ist,
wobei die erste Messeinheit eine Kamera (30) mit Detektor (32) und Abbildungsoptik aufweist (34), um eine Überlagerung des an dem Strahlteiler reflektierten ersten optischen Musters und des durch den Strahlteiler transmittierten zweiten optischen Musters auf den Detektor abzubilden, und wobei die Auswerteeinheit ausgebildet ist, um aus den relativen Positionen der Abbildung des ersten optischen Musters und des zweiten optischen Musters auf dem Detektor die Lage des ersten mechanischen Elements und des zweiten mechanischen Elements zueinander zu ermitteln.

2. Vorrichtung gemäß Anspruch 1, **dadurch gekennzeichnet, dass** das erste optische Muster (38) eine erste Farbe aufweist und das zweite optische Muster (40) eine zweite Farbe aufweist, die von der ersten Farbe verschieden ist; oder
dass das erste optische Muster (38) eine erste Farbe aufweist und das zweite optische Muster (40) eine zweite Farbe aufweist, die von der ersten Farbe verschieden ist und dass das erste optische Muster und das zweite optische Muster jeweils monochrom ausgebildet sind; oder
dass das erste optische Muster (38) eine erste Farbe aufweist und das zweite optische Muster (40) eine zweite Farbe aufweist, die von der ersten Farbe verschieden ist oder dass das erste optische Muster und das zweite optische Muster jeweils monochrom ausgebildet sind, wobei der Strahlteiler (42) als Farbteiler ausgebildet ist, der für die erste Farbe stärker reflektierend als für die zweite Farbe und für die zweite Farbe stärker transmittierend als für die erste Farbe ist.

3. Vorrichtung gemäß einem der vorhergehenden Ansprüche, **dadurch gekennzeichnet, dass** die Mittel zum Erzeugen des ersten optischen Musters (38) von einer ersten Lampenanordnung (138) an der ersten Messeinheit (18) gebildet werden; oder
dass die Mittel zum Erzeugen des ersten optischen Musters (38) von einer ersten Lampenanordnung (138) an der ersten Messeinheit (18) gebildet werden, wobei die erste Lampenanordnung (138) von einer eine Mehrzahl von in einem Muster angeordneten Lampen (139) gebildet wird.

4. Vorrichtung gemäß einem der vorhergehenden Ansprüche, **dadurch gekennzeichnet, dass** die Mittel zum Erzeugen des zweiten optischen Musters (40) eine zweite Lampenanordnung (141) an der ersten Messeinheit (18) sowie eine von der zweiten Lampenanordnung zu beleuchtende Reflektoranordnung (140) an der zweiten Messeinheit (22) aufweisen, die von der ersten Messeinheit gesehen hinter dem Strahlteiler (42) angeordnet ist; oder
dass die Mittel zum Erzeugen des zweiten optischen Musters (40) eine zweite Lampenanordnung (141) an der ersten Messeinheit (18) sowie eine von der zweiten Lampenanordnung zu beleuchtende Reflektoranordnung (140) an der zweiten Messeinheit (22) aufweisen, die von der ersten Messeinheit gesehen hinter dem Strahlteiler (42) angeordnet ist, wobei die Reflektoranordnung (140) als Retroreflektoranordnung ausgebildet ist; oder
dass die Mittel zum Erzeugen des ersten optischen Musters (38) von einer ersten Lampenanordnung (138) an der ersten Messeinheit (18) gebildet werden und dass die Mittel zum Erzeugen des zweiten optischen Musters (40) eine zweite Lampenanordnung (141) an der ersten Messeinheit (18) sowie eine von der zweiten Lampenanordnung zu beleuchtende Reflektoranordnung (140) an der zweiten Messeinheit (22) aufweisen, die von der ersten Messeinheit gesehen hinter dem Strahlteiler (42) angeordnet ist, wobei die erste und/oder die zweite Lampenanordnung als Blitzlampenanordnung (138, 141) ausgebildet ist oder dass die erste (138) und/oder die zweite Lampenanordnung (141) die Abbildungsoptik (34) umgeben; oder
dass die Mittel zum Erzeugen des ersten optischen Musters (38) von einer ersten Lampenanordnung (138) an der ersten Messeinheit (18) gebildet werden und dass die Mittel zum Erzeugen des zweiten optischen Musters (40) eine zweite Lampenanordnung (141) an der ersten Messeinheit (18) sowie eine von der zweiten Lampenanordnung zu beleuchtende Reflektoranordnung (140) an der zweiten Messeinheit (22) aufweisen, die von der ersten Messeinheit gesehen hinter dem Strahlteiler (42) angeordnet ist, wobei die erste und/oder die zweite Lampenanordnung als Blitzlampenanordnung (138, 141) ausgebildet ist und der Detektor (32) farbunempfindlich ist.

5. Vorrichtung gemäß Anspruch 3, **dadurch gekennzeichnet, dass** die Mittel zum Erzeugen des zweiten optischen Musters (40) eine zweite Lampenanordnung (240) an der zweiten Messeinheit aufweisen (22), die von der ersten Messeinheit (18) gesehen hinter dem Strahlteiler (42) angeordnet ist.

6. Vorrichtung gemäß einem der vorhergehenden Ansprüche, **dadurch gekennzeichnet, dass** die Mittel (138) zum Erzeugen des ersten optischen Musters (38) und/oder die Mittel zum Erzeugen des zweiten optischen Musters (40) ausgebildet sind, um das jeweilige Muster in Abhängigkeit von der Messsituation variabel zu erzeugen; oder
dass die Mittel (138) zum Erzeugen des ersten optischen Musters (38) und/oder die Mittel zum Erzeugen des zweiten optischen Musters (40) ausgebildet sind, um das jeweilige Muster in Abhängigkeit von der Messsituation variabel zu erzeugen, wobei die Mittel zum Erzeugen des zweiten optischen Musters (40) eine zweite Lampenanordnung (240) an der zweiten Messeinheit aufweisen (22), die von der ersten Messeinheit (18) gesehen hinter dem Strahlteiler (42) angeordnet ist, und die zweite Lampenanordnung (138) eine Mehrzahl einzeln angesteuerter Lampen (139) aufweist.

7. Vorrichtung gemäß einem der Ansprüche 1 oder 2, **dadurch gekennzeichnet, dass** die Mittel zum Erzeugen des ersten optischen Musters (38) eine erste Lampenanordnung (138) an der ersten Messeinheit (18) sowie eine von der ersten Lampenanordnung über den Strahlteiler (42) zu beleuchtende erste Reflektoranordnung (238) an der ersten Messeinheit aufweist; oder
dass die Mittel zum Erzeugen des ersten optischen Musters (38) eine erste Lampenanordnung (138) an der ersten Messeinheit (18) sowie eine von der ersten Lampenanordnung über den Strahlteiler (42) zu beleuchtende erste Reflektoranordnung (238) an der ersten Messeinheit aufweist, wobei die Mittel zum Erzeugen des zweiten optischen Musters (40) eine zweite Lampenanordnung (150) an der ersten Messeinheit (18) sowie eine von der zweiten Lampenanordnung zu beleuchtende zweite Reflektoranordnung (140) an der zweiten Messeinheit (22) aufweist, die von der ersten Messeinheit gesehen hinter dem Strahlteiler (42) angeordnet ist; oder
dass die Mittel zum Erzeugen des ersten optischen Musters (38) eine erste Lampenanordnung (138) an der ersten Messeinheit (18) sowie eine von der ersten Lampenanordnung über den Strahlteiler (42) zu beleuchtende erste Reflektoranordnung (238) an der ersten Messeinheit aufweist, wobei die Mittel zum Erzeugen des zweiten optischen Musters (40) eine zweite Lampenanordnung (150) an der ersten Messeinheit (18) sowie eine von der zweiten Lampenanordnung zu beleuchtende zweite Reflektoranordnung (140) an der zweiten Messeinheit (22) aufweist, die von der ersten Messeinheit gesehen hinter dem Strahlteiler (42) angeordnet ist, und wobei die erste (238) und/oder zweite Reflektoranordnung (140) als Retroreflektoranordnung ausgebildet ist.

8. Vorrichtung gemäß einem der vorhergehenden Ansprüche, **dadurch gekennzeichnet, dass** der Detektor (32) als zweiachsiger Detektor ausgebildet ist oder dass der Detektor (32) als Zeilendetektor ausgebildet ist, wobei das erste optische Muster (38) und/oder das zweite optische Muster (40) eine Mehzahl paralleler Streifen aufweist, die in der Abbildung auf dem Detektor im wesentlichen senkrecht zu der Dektorzeile stehen.

9. Vorrichtung gemäß Anspruch 2, **dadurch gekennzeichnet, dass** die Mittel zum Erzeugen des ersten optischen Musters (38) eine erste farbige Fläche an der ersten Messeinheit (18) und die Mittel zum Erzeugen des zweiten optischen Musters (40) eine zweite farbige Fläche an der zweiten Messeinheit (22) aufweisen; oder
dass die Mittel zum Erzeugen des ersten optischen Musters (38) eine erste farbige Fläche an der ersten Messeinheit (18) und die Mittel zum Erzeugen des zweiten optischen Musters (40) eine zweite farbige Fläche an der zweiten Messeinheit (22) aufweisen, wobei die Mittel zum Erzeugen des ersten optischen Musters (38) und die Mittel zum Erzeugen des zweiten optischen Musters (40) eine Beleuchtungeinrichtung (49) zum Beleuchten der ersten farbigen Fläche bzw. der zweiten farbigen Fläche aufweisen.

10. Vorrichtung gemäß einem der vorhergehenden Ansprüche, **dadurch gekennzeichnet, dass** die erste Messeinheit (18) ein Gehäuse (28) aufweist, wobei das erste optische Muster (38) an einer Stirnfläche (36) des Gehäuses erzeugt wird; oder
dass die erste Messeinheit (18) ein Gehäuse (28) aufweist, wobei das erste optische Muster (38) an einer Stirnfläche (36) des Gehäuses erzeugt wird und die Stirnfläche (36) des Gehäuses (28) mit einer Öffnung für die Abbildungsoptik (34) der Kamera (30) versehen ist; oder
dass die erste Messeinheit (18) ein Gehäuse (28) aufweist, wobei das erste optische Muster (38) an einer Stirnfläche (36) des Gehäuses erzeugt wird und die Stirnfläche (36) des Gehäuses (28) mit einer Öffnung für die Abbildungsoptik (34) der Kamera (30) versehen ist, wobei die Öffnung in einem zentralen Bereich des ersten optischen Musters (38) angeordnet ist.

11. Vorrichtung gemäß einem der vorhergehenden Ansprüche, **dadurch gekennzeichnet, dass** der Strahlteiler (42) gekrümmt ist, wobei die Krümmung in Abhängigkeit von dem Abstand zwischen der ersten (18) und der zweiten Messeinheit (22) gewählt ist, um die Entfernungsabhängigkeit der Winkelempfindlichkeit der Vorrichtung zu kompensieren.

12. Vorrichtung gemäß Anspruch 2, **dadurch gekennzeichnet, dass** der Detektor (32) farbempfindlich ist.

13. Vorrichtung gemäß einem der vorhergehenden Ansprüche, **dadurch gekennzeichnet, dass** es sich bei dem ersten mechanischen Element um eine erste Welle (10) und bei dem zweiten mechanischen Element (14) um eine zweite Welle handelt, wobei die erste Messeinheit (18) zum Ansetzen an eine Umfangsfläche der ersten Welle und die zweite Messeinheit (22) zum Ansetzen an eine Umfangsfläche der zweiten Welle ausgebildet sind.

14. Vorrichtung gemäß Anspruch 13, **dadurch gekennzeichnet, dass** die Mittel (138) zum Erzeugen des ersten optischen Musters (38) und/oder die Mittel zum Erzeugen des zweiten optischen Musters (40) ausgebildet sind, um das jeweilige Muster in Abhängigkeit von der Messsituation variabel zu erzeugen und dass die Mittel (138) zum Erzeugen des ersten optischen Musters (38) und/oder die Mittel zum Erzeugen des zweiten optischen Musters (40) ausgebildet sind, um das jeweilige Muster mit variabler Ausdehnung entsprechend dem Abstand der beiden Messeinheiten (18, 22), dem Winkelversatz der Wellen (10, 14) und/oder dem Parallelversatz der Wellen zu erzeugen.

15. Verfahren zum Ermitteln der Lage eines ersten mechanischen Elements (10, 110) und eines zweiten mechanischen Elements (14, 110) zueinander, wobei:
eine erste Messeinheit (18) an das erste mechanische Element und eine zweite Messeinheit (22) an das zweite mechanische Element angesetzt wird, wobei die erste Messeinheit eine Kamera (30) mit Detektor (32) und Abbildungsoptik (34) aufweist, und wobei die zweite Messeinheit einen Strahlteiler (42) aufweist, welcher der ersten Messeinheit zugewandt ist;
ein erstes optisches Muster (38) an der ersten Messeinheit und ein zweites optisches Muster (40) an der zweiten Messeinheit erzeugt wird, wobei das zweite optische Muster von der ersten Messeinheit gesehen hinter dem Strahlteiler angeordnet ist;
mittels der Abbildungsoptik eine Überlagerung des an dem Strahlteiler reflektierten ersten optischen Musters und des durch den Strahlteiler transmittierten zweiten optischen Musters auf den Detektor abgebildet wird; und
die relativen Positionen der Abbildung (38', 138', 40', 140') des ersten optischen Musters (38) und des zweiten optischen Musters (40) auf dem Detektor ermittelt werden und daraus die Lage der mechanischen Elemente zueinander ermittelt wird.

## Claims

1. Apparatus for ascertaining the location of a first mechanical element (10, 110) and of a second mechanical element (14, 110) in relation to one another, having a first measurement unit (18) for placement on the first mechanical element, a second measurement unit (22) for placement on the second mechanical element, and an evaluation unit (24), wherein the apparatus has means (49; 138; 42, 238) for producing a first optical pattern (38) on the first measurement unit and means (49; 140, 141; 240) for producing a second optical pattern (40) on the second measurement unit,
wherein the second measurement unit has a beam splitter (42) that faces the first measurement unit when the measurement units are placed on the respective mechanical element, wherein the second optical pattern is arranged, viewed from the first measurement unit, downstream of the beam splitter,
wherein the first measurement unit has a camera (30) with a detector (32) and an imaging optical unit (34) to image a superposition of the first optical pattern reflected at the beam splitter and of the second optical pattern transmitted by the beam splitter onto the detector, and wherein the evaluation unit is configured to ascertain the location of the first mechanical element and of the second mechanical element in relation to one another from the relative positions of the imaging of the first optical pattern and of the second optical pattern on the detector.

2. Apparatus according to Claim 1, **characterized in that** the first optical pattern (38) has a first colour and the second optical pattern (40) has a second colour that differs from the first colour; or
**in that** the first optical pattern (38) has a first colour and the second optical pattern (40) has a second colour that differs from the first colour and **in that** the first optical pattern and the second optical pattern are each configured to be monochrome; or
**in that** the first optical pattern (38) has a first colour and the second optical pattern (40) has a second colour that differs from the first colour or **in that** the first optical pattern and the second optical pattern are each configured to be monochrome, wherein the beam splitter (42) is configured as a colour splitter that is more strongly reflective for the first colour than for the second colour and is more strongly transmissive for the second colour than for the first colour.

3. Apparatus according to one of the preceding claims, **characterized in that** the means for producing the first optical pattern (38) are formed by a first lamp arrangement (138) on the first measurement unit (18); or **in that** the means for producing the first optical pattern (38) are formed by a first lamp arrangement (138) on the first measurement unit (18), wherein the first lamp arrangement (138) is formed by a plurality of lamps arranged in a pattern.

4. Apparatus according to one of the preceding claims, **characterized in that** the means for producing the second optical pattern (40) have a second lamp arrangement (141) on the first measurement unit (18) and a reflector arrangement (114), to be illuminated by the second lamp arrangement, on the second measurement unit (22) that is arranged, viewed from the first measurement unit, downstream of the beam splitter (42); or
**in that** the means for producing the second optical pattern (40) have a second lamp arrangement (141) on the first measurement unit (18) and a reflector arrangement (140), to be illuminated by the second lamp arrangement, on the second measurement unit (22) that is arranged, viewed from the first measurement unit, downstream of the beam splitter (42), wherein the reflector arrangement (140) is configured as a retroreflector arrangement; or **in that** the means for producing the first optical pattern (38) are formed by a first lamp arrangement (138) on the first measurement unit (18) and **in that** the means for producing the second optical pattern (40) have a second lamp arrangement (141) on the first measurement unit (18) and a reflector arrangement (140), to be illuminated by the second lamp arrangement, on the second measurement unit (22) that is arranged, viewed from the first measurement unit, downstream of the beam splitter (42), wherein the first and/or the second lamp arrangement is configured as a flash lamp arrangement (138, 141) or that the first lamp arrangement (138) and/or the second lamp arrangement (141) surround the imaging optical unit (34); or
**in that** the means for producing the first optical pattern (38) are formed by a first lamp arrangement (138) on the first measurement unit (18) and **in that** the means for producing the second optical pattern (40) have a second lamp arrangement (141) on the first measurement unit (18) and a reflector arrangement (140), to be illuminated by the second lamp arrangement, on the second measurement unit (22) that is arranged, viewed from the first measurement unit, downstream of the beam splitter (42), wherein the first and/or the second lamp arrangement is configured as a flash lamp arrangement (138, 141) and the detector (32) is insensitive to colour.

5. Apparatus according to Claim 3, **characterized in that** the means for producing the second optical pattern (40) have a second lamp arrangement (240) on the second measurement unit (22) that is arranged, viewed from the first measurement unit (18), downstream of the beam splitter (42).

6. Apparatus according to one of the preceding claims, **characterized in that** the means (138) for producing the first optical pattern (38) and/or the means for producing the second optical pattern (40) are configured to variably produce the respective pattern in dependence on the measurement situation; or
**in that** the means (138) for producing the first optical pattern (38) and/or the means for producing the second optical pattern (40) are configured to variably produce the respective pattern in dependence on the measurement situation, wherein the means for producing the second optical pattern (40) have a second lamp arrangement (240) on the second measurement unit (22) that is arranged, viewed from the first measurement unit (18), downstream of the beam splitter (42) and the second lamp arrangement (138) has a plurality of individually actuated lamps (139).

7. Apparatus according to either of Claims 1 and 2, **characterized in that** the means for producing the first optical pattern (38) has a first lamp arrangement (138) on the first measurement unit (18) and a first reflector arrangement (238), to be illuminated by the first lamp arrangement via the beam splitter (42), on the first measurement unit; or
**in that** the means for producing the first optical pattern (38) has a first lamp arrangement (138) on the first measurement unit (18) and a first reflector arrangement (238), to be illuminated by the first lamp arrangement via the beam splitter (42), on the first measurement unit, wherein the means for producing the second optical pattern (40) have a second lamp arrangement (150) on the first measurement unit (18) and a second reflector arrangement (140), to be illuminated by the second lamp arrangement, on the second measurement unit (22) that is arranged, viewed from the first measurement unit, downstream of the beam splitter (42); or
**in that** the means for producing the first optical pattern (38) have a first lamp arrangement (138) on the first measurement unit (18) and a first reflector arrangement (238), to be illuminated by the first lamp arrangement via the beam splitter (42), on the first measurement unit, wherein the means for producing the second optical pattern (40) have a second lamp arrangement (150) on the first measurement unit (18) and a second reflector arrangement (140), to be illuminated by the second lamp arrangement, on the second measurement unit (22) that is arranged, viewed from the first measurement unit, downstream of the beam splitter (42), and wherein the first reflector arrangement (238) and/or the second reflector arrangement (140) is configured as a retroreflector arrangement.

8. Apparatus according to one of the preceding claims, **characterized in that** the detector (32) is configured as a two-axis detector or **in that** the detector (32) is configured as a line-array detector, wherein the first optical pattern (38) anf/or the second optical pattern (40) has a plurality of parallel stripes that are substantially perpendicular to the detector line in the imaging on the detector.

9. Apparatus according to Claim 2, **characterized in that** the means for producing the first optical pattern (38) have a first colour area on the first measurement unit (18) and the means for producing the second optical pattern (40) have a second colour area on the second measurement unit (22); or
**in that** the means for producing the first optical pattern (38) have a first colour area on the first measurement unit (18) and the means for producing the second optical pattern (40) have a second colour area on the second measurement unit (22), wherein the means for producing the first optical pattern (38) and the means for producing the second optical pattern (40) have an illumination device (49) for illuminating the first colour area or the second colour area.

10. Apparatus according to one of the preceding claims, **characterized in that** the first measurement unit (18) has a housing (28), wherein the first optical pattern (38) is produced on a front face (36) of the housing; or
**in that** the first measurement unit (18) has a housing (28), wherein the first optical pattern (38) is produced on a front face (36) of the housing and the front face (36) of the housing (28) is provided with an opening for the imaging optical unit (34) of the camera (30); or
**in that** the first measurement unit (18) has a housing (28), wherein the first optical pattern (38) is produced on a front face (36) of the housing and the front face (36) of the housing (28) is provided with an opening for the imaging optical unit (34) of the camera (30), wherein the opening is arranged in a central region of the first optical pattern (30).

11. Apparatus according to one of the preceding claims, **characterized in that** the beam splitter (42) is curved, wherein the curvature is selected in dependence on the distance between the first measurement unit (18) and the second measurement unit (22) so as to compensate the distance dependence of the angle sensitivity of the apparatus.

12. Apparatus according to Claim 2, **characterized in that** the detector (32) is sensitive to colour.

13. Apparatus according to one of the preceding claims, **characterized in that** the first mechanical element is a first shaft (10) and the second mechanical element (14) is a second shaft, wherein the first measurement unit (18) is configured for being placed on a circumferential face of the first shaft and the second measurement unit (22) is configured for being placed on a circumferential face of the second shaft.

14. Apparatus according to Claim 13, **characterized in that** the means (138) for producing the first optical pattern (38) and/or the means for producing the second optical pattern (40) are configured to variably produce the respective pattern in dependence on the measurement situation and **in that** the means (138) for producing the first optical pattern (30) and/or the means for producing the second optical pattern (40) are configured to produce the respective pattern with a variable extent in accordance with a distance of the two measurement units (18, 22), the angular offset of the shafts (10, 14) and/or the parallel offset of the shafts.

15. Method for ascertaining the location of a first mechanical element (10, 110) and a second mechanical element (14, 110) in relation to one another, wherein:
a first measurement unit (18) is placed on the first mechanical element and a second measurement unit (22) is placed on the second mechanical element, wherein the first measurement unit has a camera (30) with a detector (32) and an imaging optical unit (34) and wherein the second measurement unit has a beam splitter (42) facing the first measurement unit;
a first optical pattern (38) is produced on the first measurement unit and a second optical pattern (40) is produced on the second measurement unit, wherein the second optical pattern is arranged, viewed from the first measurement unit, downstream of the beam splitter;
a superposition of the first optical pattern reflected at the beam splitter and of the second optical pattern transmitted by the beam splitter is imaged by way of the imaging optical unit onto the detector; and
the relative positions of the imaging (38', 138', 40', 140') of the first optical pattern (38) and of the second optical pattern (40) on the detector are ascertained and the location of the mechanical elements in relation to one another is ascertained therefrom.

## Revendications

1. Dispositif de détermination de la position d'un premier élément mécanique (10, 110) et d'un deuxième élément mécanique (14, 110) l'un par rapport à l'autre, avec une première unité de mesure (18) à poser au niveau du premier élément mécanique, une deuxième unité de mesure (22) à poser au niveau du deuxième élément mécanique, ainsi qu'une unité d'analyse (24), le dispositif comportant des moyens (49 ; 138 ; 42, 238) de réalisation d'un premier motif optique (38) au niveau de la première unité de mesure ainsi que des moyens (49 ; 140, 141 ; 240) de réalisation d'un deuxième motif optique (40) au niveau de la deuxième unité de mesure, la deuxième unité de mesure comportant un séparateur de faisceau (42) qui est tourné vers la première unité de mesure lorsque les unités de mesure sont posées au niveau de l'élément mécanique respectif, le deuxième motif optique, tel qu'il est vu depuis la première unité de mesure, étant disposé derrière le séparateur de faisceau, la première unité de mesure comportant une caméra (30) avec un détecteur (32) et un système optique d'imagerie (34) pour la formation sur le détecteur de l'image d'une superposition du premier motif optique réfléchi au niveau du séparateur de faisceau et du deuxième motif optique transmis à travers le séparateur de faisceau, et l'unité d'analyse étant réalisée pour déterminer, à partir des positions relatives de l'image du premier motif optique et du deuxième motif optique formée sur le détecteur, la position du premier élément mécanique et du deuxième élément mécanique l'un par rapport à l'autre.

2. Dispositif selon la revendication 1, **caractérisé en ce que** le premier motif optique (38) présente une première couleur et le deuxième motif optique (40) présente une deuxième couleur différente de la première couleur ; ou
**en ce que** le premier motif optique (38) présente une première couleur et le deuxième motif optique (40) présente une deuxième couleur différente de la première couleur et **en ce que** le premier motif optique et le deuxième motif optique sont respectivement réalisés de façon monochrome ; ou
**en ce que** le premier motif optique (38) présente une première couleur et le deuxième motif optique (40) présente une deuxième couleur différente de la première couleur ou **en ce que** le premier motif optique et le deuxième motif optique sont respectivement réalisés de façon monochrome, le séparateur de faisceau (42) prenant la forme d'un séparateur de couleurs qui est plus réfléchissant pour la première couleur que pour la deuxième couleur et plus transmissif pour la deuxième couleur que pour la première couleur.

3. Dispositif selon l'une des revendications précédentes, **caractérisé en ce que** les moyens de réalisation du premier motif optique (38) sont formés par un premier agencement de lampe (138) au niveau de la première unité de mesure (18) ; ou
**en ce que** les moyens de réalisation du premier motif optique (38) sont formés par un premier agencement de lampe (138) au niveau de la première unité de mesure (18), le premier agencement de lampe (138) étant formé par l'une d'une pluralité de lampes (139) agencées selon un motif.

4. Dispositif selon l'une des revendications précédentes, **caractérisé en ce que** les moyens de réalisation du deuxième motif optique (40) comportent un deuxième agencement de lampe (141) au niveau de la première unité de mesure (18) ainsi qu'un agencement de réflecteur (140) devant être éclairé par le deuxième agencement de lampe au niveau de la deuxième unité de mesure (22), lequel est disposé derrière le séparateur de faisceau (42) tel qu'il est vu depuis la première unité de mesure ; ou
**en ce que** les moyens de réalisation du deuxième motif optique (40) comportent un deuxième agencement de lampe (141) au niveau de la première unité de mesure (18) ainsi qu'un agencement de réflecteur (140) devant être éclairé par le deuxième agencement de lampe au niveau de la deuxième unité de mesure (22), lequel est disposé derrière le séparateur de faisceau (42) tel qu'il est vu depuis la première unité de mesure, l'agencement de réflecteur (140) prenant la forme d'un agencement de rétroréflecteur ; ou
**en ce que** les moyens de réalisation du premier motif optique (38) sont formés par un premier agencement de lampe (138) au niveau de la première unité de mesure (18) et **en ce que** les moyens de réalisation du deuxième motif optique (40) comportent un deuxième agencement de lampe (141) au niveau de la première unité de mesure (18) ainsi qu'un agencement de réflecteur (140) devant être éclairé par le deuxième agencement de lampe au niveau de la deuxième unité de mesure (22), lequel est disposé derrière le séparateur de faisceau (42) tel qu'il est vu depuis la première unité de mesure, le premier et/ou le deuxième agencement de lampe prenant la forme d'un agencement de lampe à éclair (138, 141), ou **en ce que** le premier (138) et/ou le deuxième agencement de lampe (141) entourent l'optique d'imagerie (34) ; ou
**en ce que** les moyens de réalisation du premier motif optique (38) sont formés par un premier agencement de lampe (138) au niveau de la première unité de mesure (18) et **en ce que** les moyens de réalisation du deuxième motif optique (40) comportent un deuxième agencement de lampe (141) au niveau de la première unité de mesure (18) ainsi qu'un agencement de réflecteur (140) devant être éclairé par le deuxième agencement de lampe au niveau de la deuxième unité de mesure (22), lequel est disposé derrière le séparateur de faisceau (42) tel qu'il est vu depuis l'unité de mesure, le premier et/ou le deuxième agencement de lampe étant réalisé sous la forme d'un agencement de lampe à éclair (138, 141) et le détecteur (32) étant insensible aux couleurs.

5. Dispositif selon la revendication 3, **caractérisé en ce que** les moyens de réalisation du deuxième motif optique (40) comportent un deuxième agencement de lampe (240) au niveau de la deuxième unité de mesure (22), lequel est disposé derrière le séparateur de faisceau (42) tel qu'il est vu depuis la première unité de mesure (18).

6. Dispositif selon l'une des revendications précédentes, **caractérisé en ce que** les moyens (138) de réalisation du premier motif optique (38) et/ou les moyens de réalisation du deuxième motif optique (40) sont réalisés de manière à réaliser le motif respectif de façon variable en fonction de la situation de mesure ; ou
**en ce que** les moyens (138) de réalisation du premier motif optique (38) et/ou les moyens de réalisation du deuxième motif optique (40) sont réalisés de manière à réaliser le motif respectif de façon variable en fonction de la situation de la mesure, les moyens de réalisation du deuxième motif optique (40) comportant un deuxième agencement de lampe (240) au niveau de la deuxième unité de mesure (22), lequel est disposé derrière le séparateur de faisceau (42) tel qu'il est vu depuis la première unité de mesure (18), et le deuxième agencement de lampe (138) comportant une pluralité de lampes (139) commandées individuellement.

7. Dispositif selon l'une des revendications 1 ou 2, **caractérisé en ce que** les moyens de réalisation du premier motif optique (38) comportent un premier agencement de lampe (138) au niveau de la première unité de mesure (18) ainsi qu'un premier agencement de réflecteur (238) devant être éclairé par le premier agencement de lampe par l'intermédiaire du séparateur de faisceau (42) au niveau de la première unité de mesure ; ou
**en ce que** les moyens de réalisation du premier motif optique (38) comportent un premier agencement de lampe (138) au niveau de la première unité de mesure (18) ainsi qu'un premier agencement de réflecteur (238) devant être éclairé par le premier agencement de lampe par l'intermédiaire du séparateur de faisceau (42) au niveau de la première unité de mesure, les moyens de réalisation du deuxième motif optique (40) comportant un deuxième agencement de lampe (150) au niveau de la première unité de mesure (18) ainsi qu'un deuxième agencement de réflecteur (140) devant être éclairé par le deuxième agencement de lampe au niveau de la deuxième unité de mesure (22), lequel est disposé derrière le séparateur de faisceau (42) tel qu'il est vu depuis la première unité de mesure ; ou
**en ce que** les moyens de réalisation du premier motif optique (38) comportent un premier agencement de lampe (138) au niveau de la première unité de mesure (18) ainsi qu'un premier agencement de réflecteur (238) devant être éclairé par le premier agencement de lampe par l'intermédiaire du séparateur de faisceau (42) au niveau de la première unité de mesure, les moyens de réalisation du deuxième motif optique (40) comportant un deuxième agencement de lampe (150) au niveau de la première unité de mesure (18) ainsi qu'un deuxième agencement de réflecteur (140) devant être éclairé par le deuxième agencement de lampe au niveau de la deuxième unité de mesure (22), lequel est disposé derrière le séparateur de faisceau (42) tel qu'il est vu depuis la première unité de mesure, et le premier (238) et/ou le deuxième agencement de réflecteur (140) prenant la forme d'un agencement de rétroréflecteur.

8. Dispositif selon l'une des revendications précédentes, **caractérisé en ce que** le détecteur (32) prend la forme d'un détecteur biaxial ou **en ce que** le détecteur (32) prend la forme détecteur de lignes, le premier motif optique (38) et/ou le deuxième motif optique (40) comportant une pluralité de bandes parallèles qui sont pour l'essentiel perpendiculaires à la ligne du détecteur dans l'image formée sur le détecteur.

9. Dispositif selon la revendication 2, **caractérisé en ce que** les moyens de réalisation du premier motif optique (38) comportent une première surface colorée au niveau de la première unité de mesure (18) et les moyens de réalisation du deuxième motif optique (40) comportent une deuxième surface colorée au niveau de la deuxième unité de mesure (22) ; ou
**en ce que** les moyens de réalisation du premier motif optique (38) comportent une première surface colorée au niveau de la première unité de mesure (18) et les moyens de réalisation du deuxième motif optique (40) comportent une deuxième surface colorée au niveau de la deuxième unité de mesure (22), les moyens de réalisation du premier motif optique (38) et les moyens de réalisation du deuxième motif optique (40) comportant un dispositif d'éclairage (49) pour éclairer la première surface colorée ou la deuxième surface colorée.

10. Dispositif selon l'une des revendications précédentes, **caractérisé en ce que** la première unité de mesure (18) comporte un boîtier (28), le premier motif optique (38) étant réalisé au niveau d'une face avant (36) du boîtier ; ou
**en ce que** la première unité de mesure (18) comporte un boîtier (28), le premier motif optique (38) étant réalisé au niveau d'une face avant (36) du boîtier et la face avant (36) du boîtier (28) étant pourvue d'une ouverture pour l'optique d'imagerie (34) de la caméra (30) ; ou **en ce que** la première unité de mesure (18) comporte un boîtier (28), le premier motif optique (38) étant réalisé au niveau d'une face avant (36) du boîtier et la face avant (36) du boîtier (28) étant pourvue d'une ouverture pour l'optique d'imagerie (34) de la caméra (30), l'ouverture étant disposée dans une zone centrale du premier motif optique (38).

11. Dispositif selon l'une des revendications précédentes, **caractérisé en ce que** le séparateur de faisceau (42) est courbé,
la courbure étant sélectionnée en fonction de la distance entre la première (18) et la deuxième (22) unité de mesure pour compenser la dépendance en distance de la sensibilité angulaire du dispositif.

12. Dispositif selon la revendication 2, **caractérisé en ce que** le détecteur (32) est sensible aux couleurs.

13. Dispositif selon l'une des revendications précédentes, **caractérisé en ce que** le premier élément mécanique est un premier arbre (10) et le deuxième élément mécanique (14) est un deuxième arbre, la première unité de mesure (18) étant réalisée pour être posée au niveau d'une surface périphérique du premier arbre et la deuxième unité de mesure (22) étant réalisée pour être posée au niveau d'une surface périphérique du deuxième arbre.

14. Dispositif selon la revendication 13, **caractérisé en ce que** les moyens (138) de réalisation du premier motif optique (38) et/ou les moyens de réalisation du deuxième motif optique (40) sont réalisés de manière à réaliser le motif respectif de façon variable en fonction de la situation de mesure, et **en ce que** les moyens (138) de réalisation du premier motif optique (38) et/ou les moyens de réalisation du deuxième motif optique (40) sont réalisés de manière à réaliser le motif respectif avec une extension variable correspondant à la distance des deux unités de mesure (18, 22), au décalage angulaire des arbres (10, 14) et/ou au décalage parallèle des arbres.

15. Procédé de détermination de la position d'un premier élément mécanique (10, 110) et d'un deuxième élément mécanique (14, 110) l'un par rapport à l'autre :
une première unité de mesure (18) étant posée au niveau du premier élément mécanique et une deuxième unité de mesure (22) étant posée au niveau du deuxième élément mécanique, la première unité de mesure comportant une caméra (30) avec un détecteur (32) et une optique d'imagerie (34), et la deuxième unité de mesure comportant un séparateur de faisceau (42) qui est tourné vers la première unité de mesure ;
un premier motif optique (38) étant réalisé au niveau de la première unité de mesure et un deuxième motif optique (40) étant réalisé au niveau de la deuxième unité de mesure, le deuxième motif optique étant disposé derrière le séparateur de faisceau tel qu'il est vu depuis la première unité de mesure ;
une image de la superposition du premier motif optique réfléchi au niveau du séparateur de faisceau et du deuxième motif optique transmis à travers le séparateur de faisceau étant formée sur le détecteur au moyen de l'optique d'imagerie ; et
les positions relatives de l'image (38', 138', 40', 140') du premier motif optique (38) et du deuxième motif optique (40) formée sur le détecteur étant déterminées et la position des éléments mécaniques l'un par rapport à l'autre étant déterminée à partir de celles-ci.
